# EUROPÄISCHE PATENTSCHRIFT

(11) **EP 2 607 814 B1**
(45) Veröffentlichungstag und Bekanntmachung des Hinweises auf die Patenterteilung: **21.10.2015**
(21) Anmeldenummer: 12007962.9
(22) Anmeldetag: 27.11.2012
(51) Int. Cl.: F24J 2/26, F24J 2/50, F24J 2/46, F24J 2/48

(54) **Sonnenkollektor mit nach oben angeordneter Glasscheibe, die Wärmestrahlung reduziert abgibt und die im direkten Kontakt zur Absorber-Wärmeübertrager-Kombination steht**
Solar collector with glass pane arranged upwards which reduces heat radiation and is in direct contact with the absorber-heat transfer device combination
Collecteur solaire avec vitre agencée vers le haut, qui dégage un rayonnement thermique réduit et qui reste en contact direct avec la combinaison absorbeur-caloporteur

(30) Priorität: 24.12.2011 DE 202011109586 U
(43) Veröffentlichungstag der Anmeldung: 26.06.2013
(73) Patentinhaber: Institut für Solarenergieforschung GmbH, 31860 Emmerthal (DE)
(72) Erfinder: Rockendorf, Gunter, 30826 Garbsen (DE); Giovanetti, Federico, 30167 Hannover (DE); Föste, Sebastian, 32676 Lügde (DE); Ehrmann, Nicole, 31855 Aerzen (DE); Glembin, Jens, 77709 Oberwolfach (DE)

(56) Entgegenhaltungen:
- EP-A1- 1 376 027
- DE-A1-102008 038 794
- GB-A- 2 301 178
- US-A1- 2004 036 993
- US-A1- 2010 006 090

## Beschreibung

Die Erfindung betrifft einen Sonnenkollektor zur Erzeugung von Niedertemperaturwärme vorzugsweise im Temperaturbereich zwischen 0 K bis 40 K oberhalb der Umgebungstemperatur, bei dem die äußere Abdeckung aus einer Glasscheibe besteht, die nach außen mit einer für Solarstrahlung (λ < 3 µm) hoch durchlässigen und für Wärmestrahlung (3 <λ< 50 µm) niedrig emittierenden Beschichtung versehen ist und die im direkten Kontakt mit der Absorber-Wärmeübertrager-Kombination steht.

Verbreitete Sonnenkollektoren für nichtkonzentrierte Sonnenstrahlung sind Flachkollektoren, bei denen die äußere Abdeckung zumeist aus einer Glasscheibe besteht und bei denen zwischen der Glasscheibe und der Absorber-Wärmeübertrager-Kombination, welche die Funktion der Wärmeerzeugung durch Sonnenstrahlungsabsorption (Absorber) und des Wärmetransports an ein Wärmeträgermedium (Wärmeübertrager) hat, ein durchgehender Luftspalt oder gasgefüllter Spalt angeordnet ist. Dieser Spalt dient in Kombination mit der Glasscheibe der Reduktion der Wärmeverluste des Kollektors. Durch einen geeigneten Aufbau des Kollektorrahmens mit Haltevorrichtungen für die Glasscheibe wird ein Kontakt zwischen Glasscheibe und Absorber-Wärmeübertrager-Kombination vermieden (vgl. zum Beispiel EP 1 243 874). Die Absorber-Wärmeübertrager-Kombination weist üblicherweise eine nach oben (zur Sonne) ebene Fläche auf und besteht häufig aus beschichtetem Kupfer, Aluminium oder beidem.

Ferner kennt man Flachkollektoren, bei denen die äußere Abdeckung aus zwei Glasscheiben besteht und bei denen die untere Glasscheibe auf ihrer Oberseite eine niedrig emittierende Beschichtung zur Reduktion des Wärmetransports durch Strahlung zwischen den Glasscheiben aufweist (vgl. zum Beispiel DE 26 18 005 A1). Derartige Flachkollektoren sind für hohe Betriebstemperaturen optimiert.

Die Nachteile von Flachkollektoren liegen in ihrem erhöhten Herstellungsaufwand und in der hohen Temperatur, die sich im Fall des Anlagenstillstands bei hoher Solarstrahlung (Stagnation) einstellt und der durch geeignete Maßnahmen begegnet werden muss.

Bekannt sind weiterhin sogenannte unabgedeckte Kollektoren, aufgrund ihres Einsatzbereichs auch oft als Schwimmbadkollektoren bezeichnet. Unabgedeckt bedeutet, dass bei diesen Kollektoren die Absorber-Wärmeübertrager-Kombination die äußere Abdeckung darstellt, der Luftspalt und die Glasscheibe fehlen. Diese Kollektoren bestehen in der Regel aus einem Kunststoffprofil, das eine nach oben ebene oder unebene Fläche aufweist und besonders kostengünstig herstellbar ist (vgl. zum Beispiel DE 31 22 391). Auch Metallformteile mit integrierten Strömungskanälen werden als Dach- oder Fassadenelemente angeboten (vgl. zum Beispiel DE 195 05 857). Die Oberflächen der Kunststoffkollektoren und der meisten Metallkollektoren haben ein hohes Wärmeabstrahlvermögen an die Umgebung, so dass sowohl hohe konvektive Verluste als auch hohe Strahlungsverluste an die Umgebung auftreten. Somit können diese Kollektoren weder im Betriebsfall noch im Stillstandsfall hohe Temperaturen erreichen.

Schließlich kennt man unabgedeckte Kollektoren mit metallischen Absorber-Wärmeübertrager-Kombinationen, die auf der zur Sonne ausgerichteten Seite eine sogenannte selektive Schicht besitzen, die im Bereich der Wärmestrahlung niedrig emittierende und im Bereich der Sonnenstrahlung stark absorbierende Eigenschaften aufweisen. Die Eigenschaft der Beschichtung, die Wärmestrahlung nur wenig zu emittieren, reduziert die Wärmestrahlungsverluste an die Umgebung. Somit kann eine höhere Temperatur als mit den unabgedeckten Kollektoren aus schwarzem Kunststoff (hohe Wärmestrahlungsemission) erzeugt werden oder bei gleicher Temperatur kann ein höherer Wirkungsgrad erzielt werden. Ein weiterer Vorteil im Vergleich zu einer nicht beschichteten Oberfläche ist, dass aufgrund der Low-e- Beschichtung auf der Außenseite eine Tau- oder Frostbildung reduziert oder gar verhindert werden kann bzw. erst bei sehr viel geringeren Fluidtemperaturen einsetzt. Nachteilig ist, dass diese Kollektoren aufgrund der metallischen Konstruktion und der aufwändigen Beschichtung teurer sind.

Grundsätzlich sind auch unabgedeckte Kollektoren aus Kunststoff vorstellbar, die auf der Oberseite eine für die Wärmestrahlung niedrig emittierende Beschichtung aufweisen, die direkt auf der Absorber-Wärmeübertrager-Kombination aufgebracht sind. Produkte nach diesem Prinzip sind jedoch nicht bekannt.

Ziel des erfindungsgemäßen Sonnenkollektors ist es, durch die Kombination eines Kunststoffabsorbers oder Metallabsorbers und einer darauf montierten Glasscheibe, deren für Solarstrahlung hoch durchlässige und für Wärmestrahlung niedrig emittierende Beschichtung (auch Low-e- Beschichtung genannt) zur Sonne ausgerichtet ist, einen kostengünstigen unabgedeckten Sonnenkollektor mit verbesserten thermischen Eigenschaften herzustellen. Dadurch wird der solare Ertrag gegenüber einem herkömmlichen unabgedeckten Kollektor gesteigert und aufgrund des höheren Temperaturniveaus der Anwendungsbereich vergrößert.

Durch die Kombination kostengünstiger Materialien und Verfahren wird eine deutliche Kostensenkung im Vergleich zu einem niedrig emittierend beschichteten, unabgedeckten metallischen Kollektor erwartet.

Der Einsatz von niedrig emittierenden Glasscheiben für solarthermische Anwendungen ist aus der Literatur bekannt. US 2004 0036993 A1 gibt beispielsweise einen ausführlichen Überblick über Beschichtungsmaterialien und -verfahren für transparente Substraten für Sonnenkollektoren sowie Architekturverglasungen. Aus DE 35 18 005 A1 ist die Verwendung einer selektiven Glasscheibe als Abdeckung von Kollektoren aus Beton bekannt. Die Glasscheibe ist auf der zur Sonne ausgerichteten Oberfläche mit einer hoch absorbierenden und zugleich niedrig emittierenden metallischen Beschichtung versehen. Dadurch ist es nur sehr eingeschränkt möglich, Emissivität und Solarabsorption unabhängig von einander zu definieren, was die Gestaltungsfreiheit des Kollektors stark limitiert.

Im Unterschied dazu ist die hier vorgestellte niedrig emittierende Beschichtung für Solarstrahlung nicht absorbierend, sondern hoch durchlässig. Die Absorption findet unterhalb der äußeren Beschichtung statt und kann unabhängig von deren Emissivität variiert werden.

Somit können aufgrund der möglichen Kombinationen mit unterschiedlichen Glassubstraten, Beschichtungen auf der unteren Oberfläche der Scheibe oder Wärmeübertragern die Flexibilität und die Produktvielfalt deutlich gesteigert werden, und es können, da Glas ein übliches Material der Gebäudehülle ist, architektonische Vorteile erreicht werden.

In US 2010 0006090 A1 wird der Einsatz einer für Solarstrahlung hoch durchlässigen und für Wärmestrahlung niedrig emittierenden Glasscheibe zur Optimierung der Leistung eines evakuierten Flachkollektors erwähnt. Im Unterschied zu dem hier vorgestellten Konzept wird aber die Beschichtung auf der Innenseite und nicht auf der Außenseite der Glasscheibe um den Strahlungsaustausch zwischen Abdeckung und Solarabsorber zu reduzieren. Der vorgestellte Aufbau ist zudem extrem aufwendig, für höhere Temperaturen gedacht und im Bezug auf eine dauerhafte Gebrauchstauglichkeit kritisch zu betrachten.

Ebenso beschreibt GB 2 301178 A einen Fensterkollektor, der aus einer Zweifach-Verglasung und einem in deren Zwischenraum integrierten Solarabsorber besteht. Die vordere und hintere Glasscheiben sind niedrig emittierend, wobei auch hier die Beschichtung auf der zum Solarabsorber zugewandten Seite aufgebracht sind. Die Scheiben sind zudem mit Abstand zu dem Absorber angeordnet und nicht direkt kontaktiert.

Aus DE 10 2008 038 794 A1. ist ein Sonnenkollektor bekannt, der aus einem nicht spektral selektiven Absorber und einer niedrig emittierenden Glassabdeckung besteht. Die Beschichtung wird als Überhitzungsschutz verwendet, um gleichzeitig einen leistungsfähigen Kollektor zu realisieren und die Temperatur des Absorbers zu reduzieren. Um ihre Funktion zu erfüllen wird auch hier die Beschichtung auf der zum Absorber zugewandten Seite aufgebracht, wie auch aus den Bildern zu entnehmen ist. Die Glasscheibe ist wie in den vorherig zitierten Dokumenten mit Abstand zum Absorber angeordnet und nicht direkt kontaktiert.

Zudem wird in EP 1376 027 A1 ein luftgekühlter Flachkollektor präsentiert, der einen volumetrischen Solarabsorber bestehend aus Glas- oder Metallfasern mit einer niedrig emittierenden Glasscheibe zur Reduzierung der Wärmeverluste kombiniert. Glasscheibe und Absorber sind nicht miteinander verbunden und bilden damit keine Einheit. Um seine Funktion zu erfüllen ist der Solarabsorber bis zu 100 mm dick, was die gesamte Konstruktion platzaufwendig macht.

Die Literatur zeigt, dass der Einsatz von niedrig emittierenden Glasscheiben zur Erhöhung der Leistungsfähigkeit von solarthermischen Kollektoren schon lange bekannt ist. Die zitierten Lösungen sind aber komplex und weisen deutliche Nachteilen auf, insbesondere in Hinblick auf eine flexible und einfache architektonische Gebäudeintegration.

Anspruch 1 der hier vorgestellten Erfindung beschreibt einen Sonnenkollektor zur Wärmeerzeugung bestehend aus einer flüssigkeitsgekühlten Absorber-Wärmeübertrager-Kombination, die entweder eine nach oben ebene oder eine unebene Fläche aufweist und aus Kunststoff und / oder aus mindestens einem Metall besteht, sowie einer oberhalb der Absorber-Wärmeübertrager-Kombination angeordneten Glasscheibe, dadurch gekennzeichnet, dass die Glasscheibe auf ihrer Oberseite mit einer für Solarstrahlung hoch durchlässigen und für Wärmestrahlung niedrig emittierenden Beschichtung versehen ist und dass die Absorber-Wärmeübertrager-Kombination durch Lamination oder flächige, streifenförmige oder punktförmige Klebung oder mechanische Klemmung oder Eigengewicht direkt mit der Unterseite der Glasscheibe kontaktiert wird.

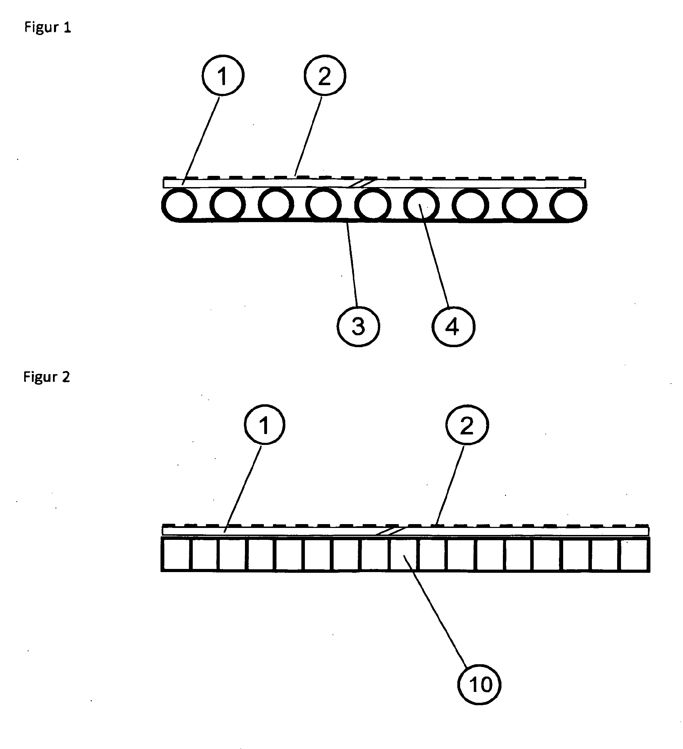

Figur 1 zeigt den Querschnitt eines erfindungsgemäßen Sonnenkollektors nach Anspruch 1, der direkt oberhalb der Absorber-Wärmeübertrager-Kombination (3) eine Glasscheibe (1) mit einer niedrig emittierenden Beschichtung (2) aufweist, die nach oben (in Richtung zur Sonne) angeordnet ist. Die Absorber-Wärmeübertrager-Kombination kann entweder aus Kunststoff und / oder aus einem oder mehreren Metallen hergestellt werden.

Die Absorber-Wärmeübertrager-Kombination kann wie ein unabgedeckter Kunststoffkollektor aufgebaut sein, wie er typischerweise zur Freibadwassererwärmung eingesetzt wird. Er besteht vorzugsweise aus miteinander verbundenen runden oder ovalen Rohrprofilen (4) (siehe Figur 1), so dass die Absorber-Wärmeübertrager-Kombination nach oben keine ebene Fläche aufweist.

Alternativ kann die Absorber-Wärmeübertrager-Kombination nach oben eine ebene Fläche aufweisen. Möglich wäre zum Beispiel der Einsatz einer Stegdoppelplatte (10) (siehe Figur 2) oder einer Stegmehrfachplatte, bei der die rechteckigen Hohlräume für die Durchströmung mit dem Wärmeträger vorgesehen sind. Metallische Absorber-Wärmeübertrager-Kombinationen mit einer Oberseite ohne Erhebungen sind eine weitere mögliche Variante der Erfindung.

Im Fall der Variante nach Figur 1 entstehen zwischen der nach oben unebenen Absorber-Wärmeübertrager-Kombination (3) und der Glasscheibe (1) Hohlräume, die durch die Kontaktstellen unterbrochen werden. Diese Hohlräume reduzieren die Wärmeverluste dadurch, dass der thermische Kontakt zwischen der Glasscheibe (1) und dem Absorber (3) gegenüber dem Fall des nach oben ebenen Absorbers verschlechtert wird.

Da die Kollektortemperatur im Fall des Stillstands keine sehr hohen Werte annehmen wird, sind für die Absorber-Wärmeübertrager-Kombinationen (3) geeignete kostengünstige Vertreter aus Kunststoffklassen wie Thermoplaste oder Elastomere einsetzbar.

Die thermische Verbindung zwischen Absorber und Glasscheibe kann einerseits durch das Eigengewicht der aufliegenden Glasscheibe gewährleistet werden, es kann jedoch auch andererseits eine dauerhafte mechanische Verbindung hergestellt werden.

Insbesondere bei metallischen Absorber-Wärmeübertrager-Kombinationen kann die Glasscheibe (1) entweder direkt auf die Absorber-Wärmeübertrager-Platte gelegt und geeignet fixiert werden oder durch eine Laminierung oder Klebung mit der Absorber-Wärmeübertrager-Platte verbunden werden, ohne dass Hohlräume entstehen. Alternativ ist es nach Anspruch 1 vorgesehen, dass die Absorber-Wärmeübertrager-Kombination durch Lamination oder flächige, streifenförmige oder punktförmige Klebung mit der Glasscheibe kontaktiert wird.

Nach Anspruch 2 ist vorgesehen, dass der flüssigkeitsdurchströmte Teil der Absorber-Wärmeübertrager-Kombination aus einzeln montierten Rohren oder Hohlprofilen besteht.

Die Glasscheibe (1) erhält auf ihrer Oberseite (d.h. zur Sonne ausgerichteten Seite) die für Solarstrahlung hoch durchlässige und für Wärmestrahlung niedrig emittierende Beschichtung (2), die dauerhaft wetterbeständig ausgeführt sein muss. Hierzu eignen sich als Funktionsschicht sogenannte transparent leitfähige Oxide (beispielweise Indium-, Zink- oder Zinnoxid). Diese stehen als Schichtsysteme im industriellen Maßstab zur Verfügung und können kostengünstig auf Glassubstraten hergestellt werden. Das Glassubstrat muss im Gegensatz zu Flachkollektoren nicht eisenarm zur Erzielung einer hohen solaren Transparenz ausgeführt werden, da der im Substrat absorbierte Strahlungsanteil durch den Kontakt mit der Absorber-Wärmeübertrager-Kombination zum Teil genutzt werden kann. Diese Möglichkeit reduziert die Herstellungskosten deutlich.

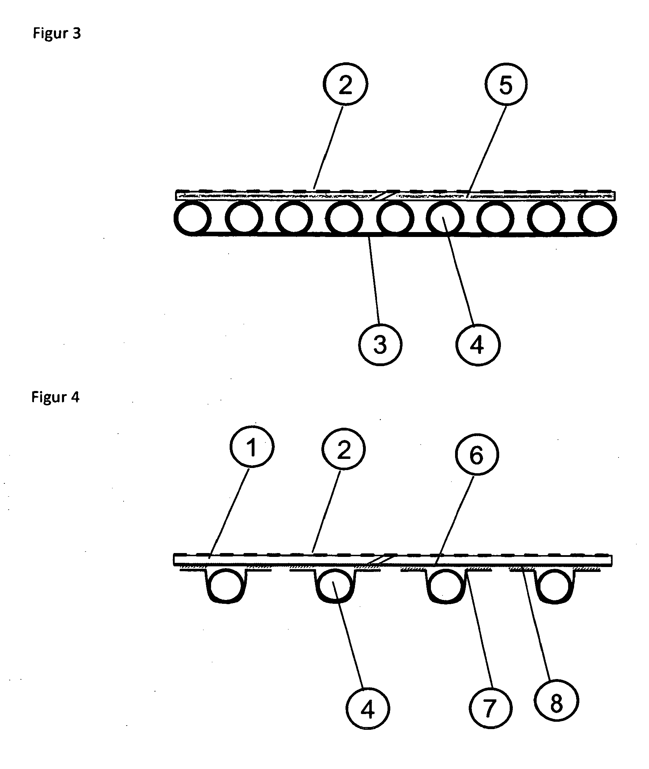

Figur 3 zeigt eine Ausführung der Erfindung nach Anspruch 3, bei der das Substrat der Glasscheibe (5) sogar gezielt eine hohe Absorption aufweist, wodurch das Absorptionsvermögen der darunter angeordneten Absorber-Wärmeübertrager-Kombination (3) geringer ausfallen kann.

In einer vorteilhaften Ausgestaltung nach Anspruch 4 (Figur 4) kann die absorbierende Schicht (6) auf der Unterseite der Glasscheibe (1) angebracht sein. Nach Anspruch 5 wird die Schicht mit üblichen Beschichtungsverfahren, z. B. durch eine Lackierung, eine Emaillierung oder eine Gasphasenabscheidung, direkt auf die Glasscheibe aufgebracht. Damit wird der Wärmeübertrager räumlich vom Absorber getrennt.

Nach Anspruch 6 findet die Absorption der Solarstrahlung im Wesentlichen in der Klebe- bzw. Laminationsschicht zwischen Glasscheibe und Wärmeübertrager.

Nach Anspruch 7 besteht der Wärmeübertrager aus einzelnen Rohren (4), die in metallische Profile, zum Beispiel Omega-förmig gestaltete formschlüssige Profile (7), eingelegt oder eingepresst sind und die Rohre (4) gegen die absorbierende Schicht (6) drücken können (vgl. Figur 4). Die formschlüssigen Profile (7), vorzugsweise aus Metall, können über eine Klebung (8) oder eine Lamination an die Glasscheibe (1) kontaktiert werden. Möglich ist es, für die Profile (7) ein geeignetes Klebeband einzusetzen.

Sowohl Wasser als auch Verschmutzungen wirken sich negativ auf die niedrig emittierenden (Low-e-) Eigenschaften der Beschichtung aus. Um diese Auswirkung zu minimieren, kann in einer weiteren Ausführung der Erfindung (Anspruch 8) das Schichtsystem (2) auf der Oberseite der Glasscheibe (1) neben den niedrig emittierenden (Low-e-) Eigenschaften hydrophobe Eigenschaften aufweisen, die im Fall der Taupunktunterschreitung der Glasscheibe die Bildung eines Wasserfilms verhindern oder verzögern. Auf diese Weise wird Tropfenbildung im Gegensatz zur Filmbildung unterstützt und das Kondensat kann leichter abfließen, mit der Folge, dass die Low-e- Eigenschaft des Schichtsystems weitgehend beibehalten wird.

Ferner kann in einer Variante der Erfindung nach Anspruch 9 das Schichtsystem (2) auf der Oberseite der Glasscheibe (1) neben den niedrig emittierenden (Low-e-) Eigenschaften auf der Außenseite zusätzlich photokatalytisch wirkende Eigenschaften aufweisen. Diese photokatalytisch wirkende Schicht als Teil des Schichtsystems (2) ist mit Unterstützung von Sonnenlicht in der Lage, organische Verschmutzungen in anorganische Endprodukte zu zersetzen, so dass sich kein organischer Belag auf der Scheibe ansammeln kann.

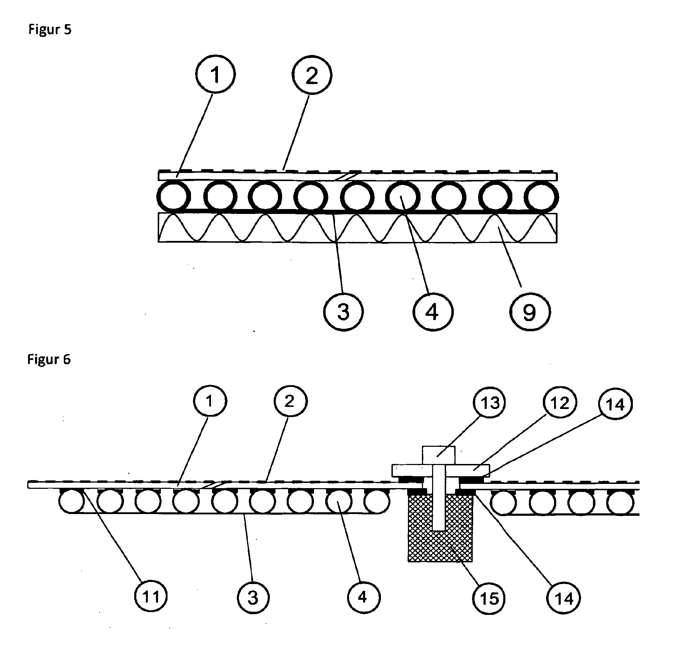

Zur Verringerung der rückseitigen Wärmeverluste kann nach Anspruch 10 in einer weiteren Ausführung der Erfindung die Absorber-Wärmeübertrager-Kombination (3) auf der Unterseite mit einer Wärmedämmung (9) ausgestattet werden (vgl. Figur 5). Diese kann vorzugsweise geklebt oder mechanisch befestigt werden.

Die Integration des Sonnenkollektors an einem Gebäude kann wie beispielhaft in Figur 6 gezeigt vorgenommen werden. Dabei handelt es sich um eine Ausführung der Erfindung, bei der die Absorber-Wärmeübertrager-Kombination (3) aus Kunststoff aus miteinander verbundenen Röhrchen unter die Glasscheibe (1) mittels der Klebeschicht (11) geklebt ist. Die Glasscheibe, vorzugsweise aus thermisch vorgespanntem Glas, wird nach Anspruch 11 so ausgeführt, dass sie an mindestens 2 Seiten über den Absorber hinausragt.

Der hinausragende Abschnitt wird durch ein Glashalteprofil (12) und eine Schraube (13) mechanisch am Gebäude, wie in Figur 6 an einem Balken oder Sparren (15) gesichert, elastische Dichtungen (14) verhindern das Eindringen von Regenwasser. Auf diese Weise kann der Kollektor als obere Dachhaut oder Fassadenoberfläche fungieren. Die Absorber-Wärmeübertrager-Kombination (3), die in Figur 6 aus Kunststoff dargestellt ist, kann in einer weiteren Variante auch metallisch ausgeführt sein.

Weiterhin kann eine Ausführung der Erfindung darin bestehen, dass ein photovoltaisches Modul (PV-Modul), bei dem die durch Absorption in den Solarzellen entstehende Wärme über einen rückseitig angeordneten Wärmeübertrager abgeführt werden kann. Diese Ausgestaltung des erfindungsgemäßen Sonnenkollektors wird als unabgedeckter photovoltaisch-thermischer Kollektor bezeichnet. Anstatt mit einer für PV-Module üblichen Glasscheibe wird der photovoltaisch-thermische Kollektor mit einer Glasscheibe ausgestattet, die an ihrer Oberseite eine niedrig emittierende Beschichtung aufweist. Der Vorteil auch für diese Ausführung besteht darin, dass ein höherer thermischer Wirkungsgrad oder eine höhere Betriebstemperatur erzielt werden kann. Nachteilig ist, dass bei bestimmten PV-Zellkonstruktionen die niedrig emittierende Beschichtung sich negativ auf die photovoltaische Leistung auswirken kann. Bei bestimmten Dünnschichtzellen kann hingegen die Low-e- Schicht bewirken, dass das PV- Modul so hohe Temperaturen erreicht, dass ein Ausheilungsprozess in den Zellen stattfindet, der den Wirkungsgrad signifikant steigern kann.

### Bezugszeichenliste

- 1: Glasscheibe
- 2: Für Solarstrahlung hoch durchlässige und für Wärmestrahlung niedrig emittierende Beschichtung
- 3: Absorber-Wärmeübertrager-Kombination
- 4: Rohrquerschnitt der Absorber-Wärmeübertrager-Kombination
- 5: Glasscheibe mit erhöhter Sonnestrahlungsabsorption im Glassubstrat
- 6: Sonnenstrahlungs- absorbierende Schicht an Unterseite der Glasscheibe
- 7: Wärmeleitendes formschlüssiges Profil für thermischen Kontakt von Rohr und Glasscheibe
- 8: Klebeschicht zur Befestigung des Profils an der Glasscheibe
- 9: Wärmedämmung
- 10: Stegdoppelplatte als Absorber-Wärmeübertrager-Kombination
- 11: Klebeschicht zur Befestigung der Absorber-Wärmeübertrager-Kombination an der Glasscheibe
- 12: Glashalteleiste
- 13: Schraube
- 14: Dichtung
- 15: Balken oder Sparren als Teil des Gebäudes, an dem der Kollektor befestigt ist

## Patentansprüche

1. Sonnenkollektor zur Wärmeerzeugung bestehend aus einer flüssigkeitsgekühlten Absorber-Wärmeübertrager-Kombination, die entweder eine nach oben ebene oder eine unebene Fläche aufweist und aus Kunststoff und / oder aus mindestens einem Metall besteht, sowie einer oberhalb der Absorber-Wärmeübertrager-Kombination angeordneten Glasscheibe, **dadurch gekennzeichnet, dass** die Glasscheibe auf ihrer Oberseite mit einer für Solarstrahlung hoch durchlässigen und für Wärmestrahlung niedrig emittierenden Beschichtung versehen ist und dass die Absorber-Wärmeübertrager-Kombination durch Lamination oder flächige, streifenförmige oder punktförmige Klebung oder mechanische Klemmung oder Eigengewicht direkt mit der Unterseite der Glasscheibe kontaktiert wird.

2. Sonnenkollektor nach Anspruch 1, **dadurch gekennzeichnet, dass** der flüssigkeitsdurchströmte Teil der Absorber-Wärmeübertrager-Kombination aus einzeln montierten Rohren oder Hohlprofilen besteht.

3. Sonnenkollektor nach Anspruch 1, **dadurch gekennzeichnet, dass** die Glasscheibe im Volumen ihres Substrats die Solarstrahlung absorbiert.

4. Sonnenkollektor nach Anspruch 1, **dadurch gekennzeichnet, dass** die Glasscheibe auf ihrer Unterseite eine die Solarstrahlung absorbierende Schicht aufweist.

5. Sonnenkollektor nach Anspruch 4, **dadurch gekennzeichnet, dass** die auf der Unterseite der Glasscheibe angebrachte absorbierende Schicht durch ein übliches Beschichtungsverfahren auf die Glasscheibe aufgebracht wird.

6. Sonnenkollektor nach Anspruch 1, **dadurch gekennzeichnet, dass** die Solarstrahlung in der Klebe- bzw. Laminationsschicht zwischen Glasscheibe und Wärmeübertrager absorbiert wird.

7. Sonnenkollektor nach einem der vorgenannten Ansprüche, **dadurch gekennzeichnet, dass** der Wärmeübertrager aus einer Kombination aus mit Flüssigkeit durchströmbaren Rohren und die Rohre umschließenden metallischen Profilen besteht, die an die Unterseite der Glasscheibe geklebt oder laminiert werden.

8. Sonnenkollektor nach einem der vorgenannten Ansprüche, **dadurch gekennzeichnet, dass** die Low-e- Beschichtung auf der Glasscheibe eine hydrophobe Wirkung aufweist.

9. Sonnenkollektor nach einem der vorgenannten Ansprüche, **dadurch gekennzeichnet, dass** die Low-e- Beschichtung auf der Glasscheibe eine photokatalytische Wirkung zur Zersetzung anorganischer Niederschläge aufweist.

10. Sonnenkollektor nach einem der vorgenannten Ansprüche, **dadurch gekennzeichnet, dass** unter der Absorber-Wärmeübertrager-Kombination eine Wärmedämmung angebracht ist.

11. Sonnenkollektor nach einem der vorgenannten Ansprüche, **dadurch gekennzeichnet, dass** die Glasscheibe an mindestens 2 Seiten über die Absorber-Wärmeübertrager-Kombination hinausragt.

## Claims

1. Solar collector to generate heat consisting of a liquid-cooled combined absorber and heat exchanger which features either a flat surface pointing upwards or an uneven surface and is made of composite material and/or at least one metal, and a pane of glass positioned above the combined absorber and heat exchanger, **characterised in that** the upper surface of the pane of glass is treated with a coating which is highly permeable to solar radiation and features low emission of heat radiation. The combined absorber and heat exchanger also comes into direct contact with the lower surface of the glass pane thanks to lamination, dead load or a flat, strip-shaped or dot-shaped mechanical clamping system.

2. Solar collector as per Claim 1, **characterised in that** the part of the combined absorber and heat exchanger through which fluid flows consists of individually fitted pipes or hollow profiles.

3. Solar collector as per Claim 1, **characterised in that** the glass pane absorbs the solar radiation into the body of its substrate.

4. Solar collector as per Claim 1, **characterised in that** the glass pane features a layer on its lower surface which absorbs solar radiation.

5. Solar collector as per Claim 4, **characterised in that** the absorbent layer attached to the lower surface of the glass pane is applied to the pane of glass using a standard coating process.

6. Solar collector as per Claim 1, **characterised in that** the solar radiation is absorbed in the adhesive or lamination layer between the glass pane and the heat exchanger.

7. Solar collector as per one of the preceding claims, **characterised in that** the heat exchanger consists of a combination between the pipes through which liquid can flow and the metal profiles enclosing the pipes, which are bonded or laminated onto the lower surface of the pane of glass.

8. Solar collector as per one of the preceding claims, **characterised in that** the low-e coating on the pane of glass produces a hydrophobic effect.

9. Solar collector as per one of the preceding claims, **characterised in that** the low-e coating on the pane of glass produces a photocatalytic effect which decomposes inorganic precipitation.

10. Solar collector as per one of the preceding claims, **characterised in that** heat insulation is affixed beneath the combined absorber and heat exchanger.

11. Solar collector as per one of the preceding claims, **characterised in that** the pane of glass overhangs the combined absorber and heat exchanger on at least two sides.

## Revendications

1. Le capteur solaire destiné à la fabrication de chaleur est composé d'un ensemble absorbeur-transmetteur thermique refroidi par liquide, qui présente soit une surface plane ou une surface non plane inclinée vers le haut et est composé de plastique et/ou au minimum d'un métal, ainsi que d'une vitre en verre, placée au-dessus de l'ensemble absorbeur-transmetteur thermique, qui se **caractérise par le fait que** la vitre en verre est équipée sur sa partie supérieure d'un revêtement qui se laisse très largement traverser par le rayonnement solaire et qui ne permet qu'un faible transfert thermique, et **par le fait que** l'ensemble absorbeur-transmetteur est directement mis en contact avec la face inférieure de la vitre en verre au moyen d'un laminage ou d'un blocage mécanique de surface, en forme de bandes ou de points, ou sous l'effet de son propre poids.

2. Le capteur solaire selon la revendication 1 se **caractérise par le fait que** la partie traversée par le liquide de l'ensemble absorbeur-transmetteur thermique se compose de tubes montés séparément ou de profils creux.

3. Le capteur solaire selon la revendication 1 se **caractérise par le fait que** la vitre en verre absorbe le rayonnement solaire dans le volume de son substrat.

4. Le capteur solaire selon la revendication 1 se **caractérise par le fait que** la vitre présente sur sa face inférieure une couche absorbant le rayonnement solaire.

5. Le capteur solaire selon la revendication 4 se **caractérise par le fait que** la couche absorbant le rayonnement solaire sur la face inférieure de la vitre en verre, est montée au moyen d'un procédé de revêtement courant.

6. Le capteur solaire selon la revendication 1 se **caractérise par le fait que** le rayonnement solaire est absorbé dans la couche de colle ou de laminage, située entre la vitre en verre et le transmetteur thermique.

7. Selon l'une des revendications mentionnées ci-dessus, le capteur solaire se **caractérise par le fait que** le transmetteur thermique se compose d'un ensemble de tubes traversés par le liquide et de profils métalliques recouvrant les tubes, qui sont collés ou laminés sur la face inférieure de la vitre en verre.

8. Selon l'une des revendications mentionnées ci-dessus, le capteur solaire se **caractérise par le fait que** le revêtement low-e de la vitre en verre a des propriétés hydrophobe.

9. Selon l'une des revendications mentionnées ci-dessus, le capteur solaire se **caractérise par le fait que** le revêtement low-e de la vitre en verre a des propriétés photocatalytiques qui permettent la décomposition des précipitations anorganiques.

10. Selon l'une des revendications mentionnées ci-dessus, le capteur solaire se **caractérise par le fait que** l'ensemble absorbeur-transmetteur thermique est équipé d'une isolation thermique.

11. Selon l'une des revendications mentionnées ci-dessus, le capteur solaire se **caractérise par le fait que** la vitre en verre dépasse, sur au moins 2 côtés, au-dessus de l'ensemble absorbeur-transmetteur thermique.
